# FASCICULE DE BREVET EUROPEEN

(11) **EP 4 225 518 B1**
(45) Date de publication et mention de la délivrance du brevet: **04.09.2024**
(21) Numéro de dépôt: 21799312.0
(22) Date de dépôt: 04.10.2021
(51) Int. Cl.: B21H 8/00, B21B 27/00, B21B 1/22, B44B 5/00

(54) **TOLE METALLIQUE A RELIEFS POUR LA REALISATION DE PLANCHERS INDUSTRIELS A PROPRIETES ADHESIVES AMELIOREES**
BLECHTAFEL MIT ERHÖHTEN BEREICHEN ZUR ERZEUGUNG EINES INDUSTRIEFUSSBODENS MIT VERBESSERTEN HAFTEIGENSCHAFTEN
SHEET METAL PLATE WITH RAISED AREAS FOR CREATING INDUSTRIAL FLOORING WITH IMPROVED ADHESIVE PROPERTIES

(30) Priorité: 09.10.2020 FR 2010325
(43) Date de publication de la demande: 16.08.2023
(73) Titulaire: Constellium Issoire, 63500 Issoire (FR)
(72) Inventeur: LORENZINO, Pablo, 38500 Saint Cassien (FR)
(74) Mandataire: Constellium - Propriété Industrielle
(86) Numéro de dépôt international: PCT/FR2021/051712
(87) Numéro de publication internationale: WO 2022/074320

(56) Documents cités:
- EP-A1- 2 316 590
- WO-A1-03/013752
- WO-A2-2011/121191
- JP-A- H03 114 601
- JP-A- S59 202 103
- US-A- 1 856 898

## Description

### DOMAINE TECHNIQUE

L'invention concerne une tôle métallique pour la réalisation de planchers, en particulier de véhicules industriels, présentant sur une de ses faces une pluralité de motifs en relief disposés de façon périodique, chaque motif étant lui-même constitué d'une ou plusieurs parties saillantes, que nous appellerons « reliefs ». Cette tôle est destinée à être collée sur un support, typiquement des planches, pour former le plancher du véhicule industriel.

### ART ANTERIEUR

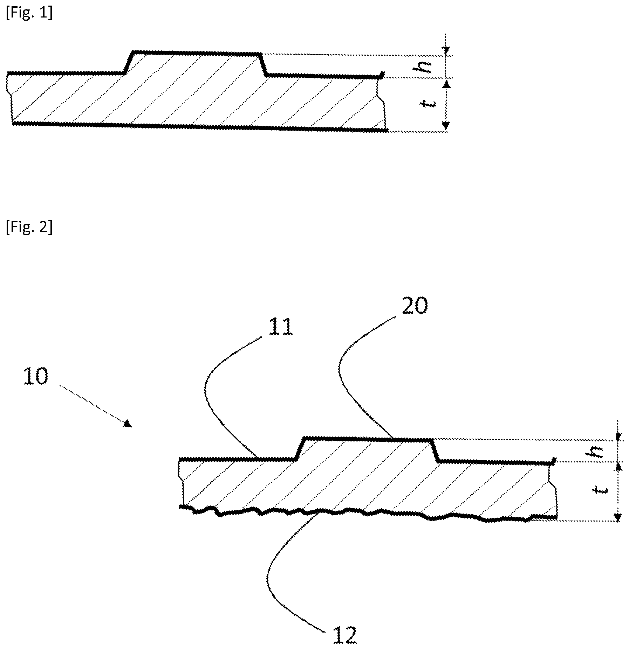

Il existe déjà sur le marché de nombreux modèles de tôles à motifs répétitifs en relief, ou « tôles relief ». Le terme « tôle relief » fait référence selon la norme EN12258-1 à une tôle « imprimée d'un motif en relief sur une face, par laminage ». Ces motifs sont par exemple décrits dans la norme NF-EN-1386 et sont souvent désignés de manière imagée (damier, grain d'orge, amande, diamant, grain de riz, damier 2, damier 5, ...). Le motif « damier 5 », également appelé « quintet », fréquemment utilisé pour réaliser les tôles de planchers industriels, présente un groupe de 5 bosses allongées, de forme demiovoïde, parallèles entre elles qui est entouré de quatre groupes identiques entre eux et déduits du premier groupe par une rotation de 90°. Les tôles qui présentent ce motif "quintet" résistent très bien à l'usure mais ont des qualités antidérapantes moyennes. La Figure 1 représente une tôle relief selon la norme EN1386. La hauteur du motif en relief est la différence, h, entre l'épaisseur maximale mesurée jusqu'au sommet du motif et l'épaisseur t de la zone attenante sans relief.

Le motif "grain de riz", décrit dans le brevet FR 2 747 948, est également utilisé pour la réalisation de tôles en alliage d'aluminium pour planchers industriels, qui présentent des propriétés d'emploi satisfaisantes, notamment parce qu'elles possèdent une bonne résistance à l'usure et offrent des conditions de contact frottant qui permettent aux piétons de déambuler sans risque de chute par glissade et aux chariots de rouler sans déraper.

La demande de brevet WO2011/121191, qui forme la base pour le préambule de la revendication 1, décrit une tôle métallique pour la réalisation de planchers, en particulier de véhicules industriels, sur lesquels doivent circuler des chariots, présentant une pluralité de motifs, dont les reliefs ont une hauteur maximale comprise entre 0,2 et 1,5 mm et une surface frottante, qui présente, quelle que soit la direction selon laquelle elle est mesurée, une largeur moyenne au moins égale à 1mm.

Les tôles relief présentent sur la face supérieure, destinée à constituer le sol et être en contact avec les personnes ou véhicules de manutention utilisés par exemple dans le véhicule industriel lesdits motifs répétitifs en relief.

La demande de brevet WO03/013752 décrit une structure et des procédés associés ayant des surfaces antidérapantes formées sur les saillies, des évidements ou d'autres surfaces de la structure pour favoriser un mouvement sûr et stable de personnes et/ou d'objets sur la structure.

La demande de brevet EP2316590 décrit une feuille gaufrée avec un motif répétitif a une pluralité d'unités de motif. Chaque unité de motif comprend un ou plusieurs reliefs allongés surélevés, un relief allongé ayant une longueur le long d'un grand axe et une largeur inférieure à la longueur le long d'un petit axe perpendiculaire au grand axe.

Le brevet US1856898 décrit la fabrication de tôles gravées caractérisées par des surfaces rendues rugueuses par des projections multiples ou de l'embossage.

La demande de brevet JPS59202103 décrit la fabrication par laminage, de bande ou de feuille ayant un motif partiellement quadrillé continu dans le sens du laminage.

La demande de brevet JPH03114601 décrit le laminage d'une bande d'acier gaufrée sur une seule face en mesurant l'épaisseur de la plaque d'acier en bande sous laminage par une jauge d'épaisseur de rayonnement et en ajustant le tirage d'un laminoir de sorte que la différence de ses valeurs moyennes devient dans une plage souhaitée.

La face inférieure de la tôle relief est le plus souvent collée sur un support, par exemple une planche en bois typiquement en contre-plaqué., pour former le plancher du véhicule industriel. Pour obtenir une adhésion suffisante entre la face inférieure de la tôle et le support, on réalise, selon l'art antérieur, un traitement de surface, typiquement de dégraissage et, le dépôt d'une couche primaire d'adhésion telle que typiquement un vernis. Ce traitement est efficace cependant il contraint à réaliser des opérations supplémentaires qui ont pour conséquence un coût élevé.

La demande de brevet JP2011069060A divulgue une feuille décorative pour un matériau de sol, dans laquelle une couche de résine transparente composée d'une couche de résine de polypropylène est superposée sur une feuille de matériau de base, dans laquelle au moins une couche de résine transparente d'une épaisseur de 150 µm ou plus est laminée sur la feuille de matériau de base via une couche adhésive, est caractérisée comme suit: (1) la couche de résine transparente est composé de deux ou plusieurs couches de résine de polypropylène; et (2) la couche de résine de polypropylène, liée à la feuille de matériau de base, parmi les deux couches de résine de polypropylène ou plus, a une rigidité à la flexion de 200 à 500 MPa.

Le brevet KR102147477B1 divulgue un panneau polyvalent avec une adhérence et une durabilité améliorées comprenant une pluralité de panneaux de couche interne liés par une résine de liaison et un panneau de couche externe liés respectivement aux surfaces supérieure et inférieure du panneau de couche interne, dans lequel une pluralité de trous d'air sont formés pour pénétrer dans la direction de la largeur le long de la direction de la longueur.

Le modèle d'utilité CN201933751U concerne une dalle de sol en métal d'une épaisseur de 1,5 à 5,5 mm. Le carreau de sol métallique comprend un panneau et un rebord formés en se pliant vers le bas à partir de la périphérie du panneau, dans lequel une pluralité de trous ouverts sont poinçonnés sur le panneau ; une extrémité de chaque trou ouvert est vers le bas pour former une barre d'ancrage reliée au panneau ; une pluralité de trous traversants sont poinçonnés sur la jante ; et une extrémité de chaque trou traversant est vers l'intérieur pour former une barre de renforcement reliée à la jante.

Le problème que cherche à résoudre la présente invention est d'obtenir une tôle relief présentant une adhésion améliorée sans nécessiter une opération de traitement de surface et de dépôt de couche primaire d'adhésion.

### EXPOSE DE L'INVENTION

Un premier objet de l'invention est une tôle métallique pour la réalisation de planchers, en particulier de véhicules industriels, ladite tôle présentant sur sa face supérieure une pluralité de motifs en relief, chaque motif en relief comprenant une ou plusieurs parties saillantes, lesdits motifs en relief étant disposés de façon périodique, discrète et ordonnée, la hauteur h desdits motifs en reliefs étant comprise entre 0,3 et 3 mm, caractérisée en ce qu'elle présente sur sa face inférieure, destinée à être collée sur un support, une surface rugueuse dont la rugosité Rₘₐₓ est comprise entre 10 µm et 250 µm.

Un second objet de l'invention est un procédé de fabrication des tôles métallique selon l'invention comprend
(i) Une étape de laminage en utilisant un cylindre de laminage gravé comportant des cavités gravées permettant d'obtenir les motifs en relief de la face supérieure de la tôle.
(ii) Une étape de fraisage électrochimique, fraisage mécanique, brossage, ou déformation typiquement sablage, grenaillage, laminage, embossage, gaufrage permettant d'obtenir la rugosité de la face inférieure de la tôle.

Un autre objet de l'invention est l'utilisation d'une tôle métallique selon l'invention pour réaliser des planchers de véhicules industriels, de préférence des planchers de véhicules frigorifiques.

### FIGURES

[Fig. 1] La Figure 1 est une représentation schématique en coupe d'une tôle relief selon l'art antérieur.
[Fig. 2] La Figure 2 est une représentation schématique en coupe d'une tôle selon l'invention.
[Fig. 3] La Figure 3 est une représentation schématique en coupe d'une tôle selon l'invention selon un mode de réalisation avantageux.
[Fig. 4] La Figure 4 illustre schématiquement le collage d'une tôle selon l'invention sur un plancher en bois.
[Fig. 5] La Figure 5 montre les motifs des exemples B (Fig. 5a) et C (Fig. 5b).
[Fig. 6] La Figure 6 est une représentation schématique du test de cisaillement de recouvrement.
[Fig. 7] La Figure 7 est une représentation schématique d'un laminoir utilisé dans le procédé selon l'invention.
[Fig. 8] La Figure 8 montre les motifs des exemples E (Fig. 8a), F (Fig. 8b), et G (Fig. 8c).

### DESCRIPTION DETAILLEE DE L'INVENTION

La tôle selon l'invention est une tôle métallique destinée à être collée sur un support pour former le plancher d'un véhicule. Selon la définition courante, une tôle est un produit laminé de section transversale globalement rectangulaire dont l'épaisseur moyenne n'excède pas 1/10ème de la largeur. Le plancher est la partie d'une construction ou d'un véhicule qui constitue une plateforme horizontale, dont la face supérieure forme le sol. Le paramètre de rugosité Rₘₐₓ est défini comme l'écart le plus grand entre le pic le plus élevé et le creux le plus bas sur la longueur analysée ou la surface analysée. Typiquement, la longueur analysée a une direction perpendiculaire à la direction de laminage de la tôle et a une valeur dépendant de la valeur Rₘₐₓ, telle que décrite ci-après :

| | |
|---|---|
| 0,025 µm < Rₘₐₓ ≤ 0,1 µm | longueur analysée typique : 0,08 mm |
| 0,1 µm < Rₘₐₓ ≤ 0,5 µm | longueur analysée typique : 0,25 mm |
| 0,5 µm < Rₘₐₓ ≤ 10 µm | longueur analysée typique : 0,80 mm |
| 10 µm < Rₘₐₓ ≤ 50 µm | longueur analysée typique : 2,50 mm |
| 50 µm < Rₘₐₓ ≤ 250 µm | longueur analysée typique : 8,00 mm |

Il peut être plus approprié pour certains facies présentant des motifs discrets de caractériser par une surface suffisante pour inclure plusieurs motifs.

Le paramètre Rₘₐₓ est notamment mentionné dans la nome BS 1134 2010 A2 dans laquelle les définitions ci-dessus peuvent être complétées si nécessaire.

La tôle selon l'invention présente sur sa face supérieure, destinée à former la face supérieure du plancher, des motifs en relief qui comprennent une ou plusieurs parties saillantes et qui, telle la maille élémentaire d'un réseau cristallin, se répètent de façon périodique et ordonnée. Un motif en relief est donc un morceau de tôle qui se répète indéfiniment par translation suivant deux directions du plan de la tôle. Ce morceau de tôle peut ne comprendre qu'une partie saillante mais il peut aussi comprendre plusieurs parties saillantes qui peuvent avoir des formes ou des orientations différentes. Il ne semble pas avantageux d'avoir des parties saillantes de hauteurs différentes mais cela n'est *a priori* pas exclu. La hauteur *h* de ces motifs en relief est comprise entre 0,3 mm et 3 mm. La hauteur du motif en relief est la différence, *h,* entre l'épaisseur maximale mesurée jusqu'au sommet du motif et l'épaisseur *t* de la zone attenante sans relief. Avantageusement, en particulier pour ce qui concerne les tôles à reliefs en alliage d'aluminium, elle est comprise entre 0,3 et 1,5 mm, de préférence entre 0,4 et 0,8 mm. Lesdits motifs se répètent aussi de façon discrète, car une telle configuration est favorable à la propriété antidérapante du plancher. En effet, les reliefs se comportent comme des indenteurs qui agissent sur la surface de la semelle ou de la bande de roulement de la roue : sous l'effet du poids du piéton ou du chariot, celle-ci se déforme et « s'enfonce » autour du relief sur une certaine hauteur dont l'ordre de grandeur est un, deux ou trois dixièmes de millimètre. Un relief discontinu favorise, dans la semelle ou la bande de roulement, la formation d'un bourrelet tout autour de sa paroi sommitale, ce qui favorise l'«accrochage» de la semelle, de la bande de roulement ou du bandage de la roue sur le plancher. D'autre part, des motifs qui se répètent de façon discrète facilitent le nettoyage, l'écoulement des fluides et leur évacuation étant plus aisée. La tôle selon l'invention ne doit donc pas présenter de relief continu.

Les motifs en relief de la face supérieure sont obtenus par laminage en utilisant un cylindre de laminage gravé caractérisé en ce qu'il comporte des cavités gravées permettant d'obtenir les motifs en relief de la tôle.

Selon l'invention la face inférieure de la tôle, destinée à être collée sur un plancher, présente une surface rugueuse dont la rugosité Rₘₐₓ est comprise entre 10 µm et 250 µm et de préférence entre 50 µm et 150 µm, préférentiellement entre 100 µm et 140 µm.

Le présent inventeur a constaté que grâce à la rugosité de la face inférieure de la tôle, l'adhésion entre le plancher, typiquement en bois, et la tôle métallique est satisfaisante en l'absence de traitement de surface et de dépôt de primaire. La rugosité selon l'invention peut être notamment obtenue par fraisage électrochimique, fraisage mécanique, brossage, ou par déformation typiquement sablage, grenaillage, laminage, embossage, gaufrage. De manière préférée la rugosité est obtenue par laminage.

Dans un mode de réalisation avantageux de l'invention, la rugosité de la face inférieure de la tôle est obtenue par une texture, de préférence réalisée par laminage. Dans ce mode de réalisation, la tôle selon l'invention présente sur sa face inférieure une texture qui comprend une ou plusieurs parties saillantes et qui se répètent de façon périodique et ordonnée. Il ne semble pas avantageux d'avoir des parties saillantes de hauteurs différentes mais cela n'est a priori pas exclu. Dans ce mode de réalisation, la rugosité Rₘₐₓ de la face inférieure de la tôle correspond à la hauteur maximale de ces parties saillantes de la face inférieure. De préférence, dans ce mode de réalisation préférée, au moins 30% et de préférence au moins 50% de la face inférieure de la tôle est couverte par la texture et/ou la dimension de la texture est comprise entre 1 et 6 mm et/ou le pas de reproduction de la texture est comprise entre 1 et 6 mm.

Avantageusement la tôle métallique selon l'invention est une tôle en alliage d'aluminium. Avantageusement, la tôle est en un alliage d'aluminium appartenant au groupe regroupant les alliages d'aluminium des séries 1xxx, 3xxx, 5xxx, 6xxx selon la désignation de l'Aluminum Association ainsi que les alliages de la série 7xxx, comprenant moins de 0,4 % Cu. De manière préférée, l'alliage est sélectionné dans la liste constituée de AA1050A, AA3003, AA3103, AA5026, AA5052, AA5083, AA5086, AA5754, AA6061, AA6082 et AA7020.

La Figure 2 représente schématiquement une tôle métallique 10 selon l'invention présentant sur sa face supérieure 11 un motif en relief comprenant une partie saillante 20, de hauteur *h* et sur sa face inférieure 12, une surface rugueuse.

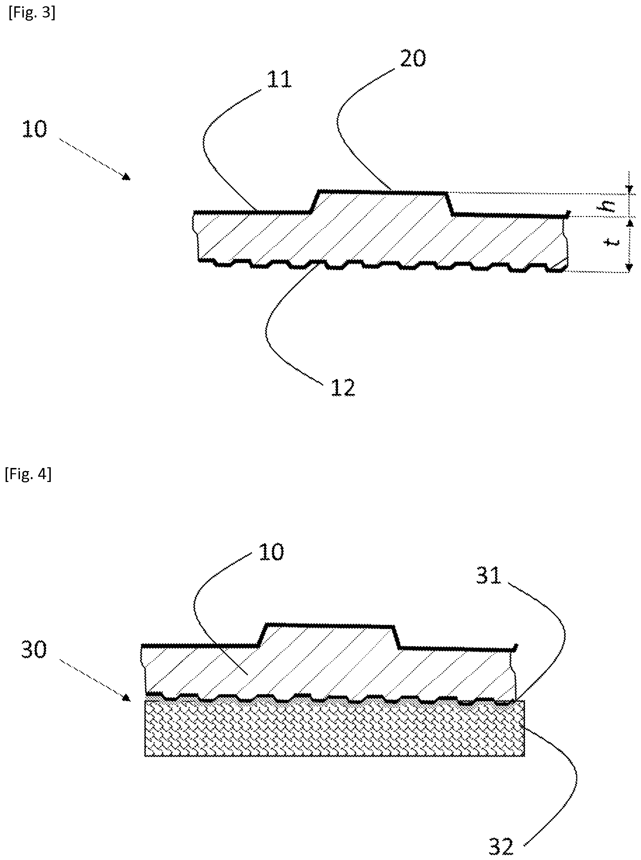

La Figure 3 représente schématiquement une tôle métallique 10 selon l'invention dans un mode de réalisation préféré présentant sur sa face supérieure 11 un motif en relief comprenant une partie saillante 20, de hauteur *h* et sursa face inférieure 12, une surface rugueuse constituée d'une texture comportant des parties saillantes se répétant de façon périodique et ordonnée.

La Figure 4 représente schématiquement un plancher 30 comprenant une tôle métallique 10 selon l'invention collée sur une planche 32 à l'aide d'un adhésif 31.

Le procédé de fabrication des tôles métallique selon l'invention comprend
(i) Une étape de laminage en utilisant un cylindre de laminage gravé comportant des cavités gravées permettant d'obtenir les motifs en relief de la face supérieure de la tôle.
(ii) Une étape de fraisage électrochimique, fraisage mécanique, brossage, ou déformation typiquement sablage, grenaillage, laminage, embossage, gaufrage permettant d'obtenir la rugosité de la face inférieure de la tôle.

Avantageusement, les deux étapes sont réalisées simultanément sur un laminoir comportant deux cylindres gravés : un premier cylindre gravé pour obtenir les motifs en relief de la face supérieure et un second cylindre gravé pour obtenir la texture de la face inférieure. Dans un mode de réalisation avantageux, les deux cylindres gravés sont les cylindres de travails utilisés lors de la dernière passe d'un laminoir tandem à chaud. Un laminoir tandem est un laminoir comprenant plusieurs cages se succédant, dans lequel le produit est en prise dans plusieurs cages en même temps.

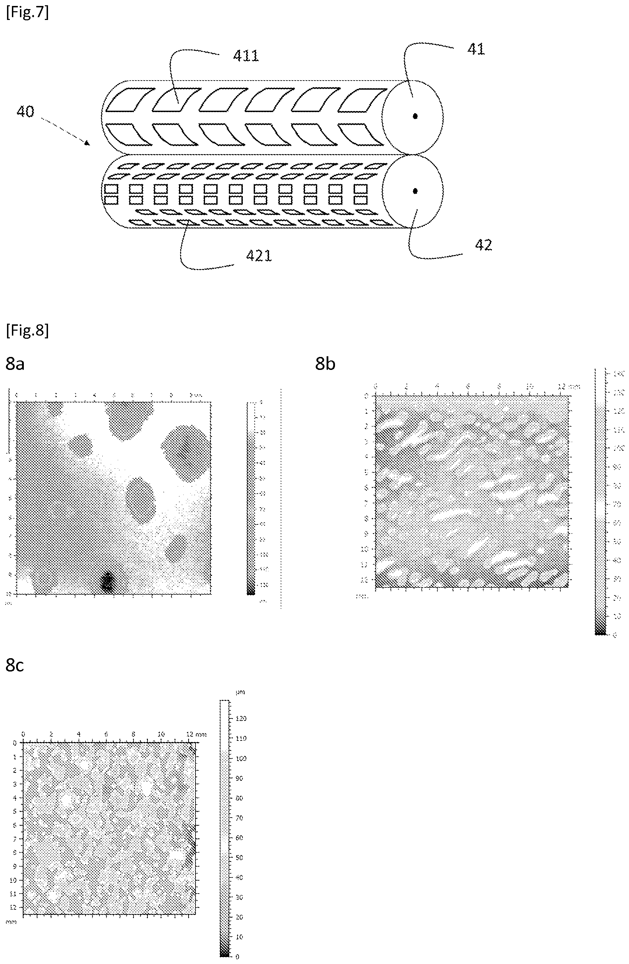

La Figure 7 représente schématiquement la dernière cage 40 d'un laminoir tandem à chaud dans ce mode de réalisation. Les cylindres de travail utilisés 41, 42 sont des cylindres gravés. Un premier cylindre gravé 41 comporte des cavités 411 permettant d'obtenir les motifs en relief de la face supérieure. Un second cylindre gravé 42 comporte des cavités 421 permettant d'obtenir la texture de la face inférieure de la tôle. L'utilisation des tôles métalliques selon l'invention pour réaliser des planchers de véhicules industriels, de préférence des planchers de véhicules frigorifiques est particulièrement avantageuse.

### EXEMPLE

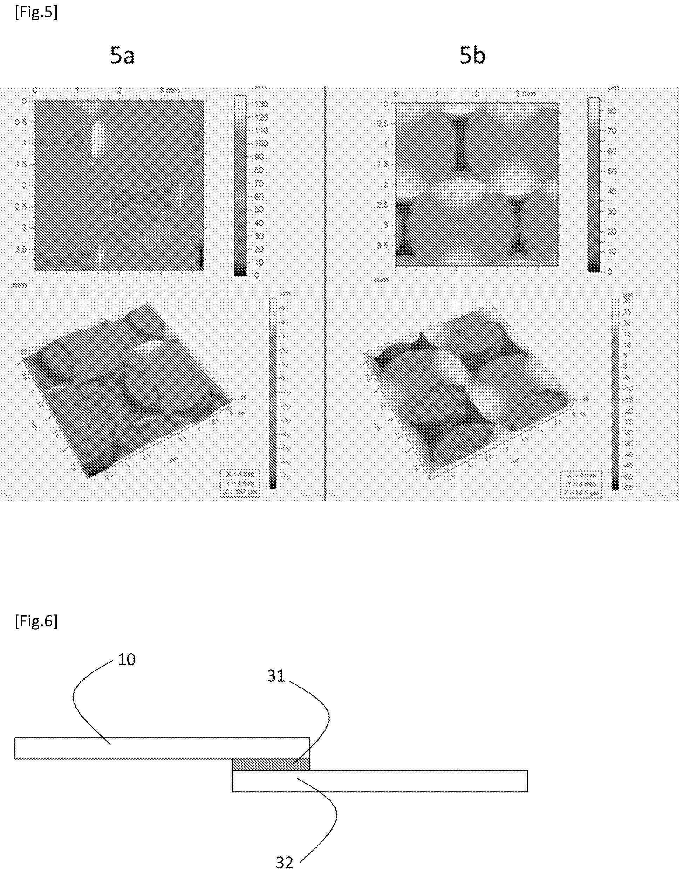

Dans cette exemple on a comparé la performance en adhésion d'une tôle en alliage AA5086 d'épaisseur 2,5 mm présentant sur la face supérieure un relief de motif grain de riz tel que défini dans la norme NF EN 1386 et sur la face inférieure une rugosité variable. Dans un exemple de référence A la face inférieure était brute de laminage et la rugosité Rₘₐₓ était inférieure à 3 µm. Dans des exemples selon l'invention B, C, E, F et G la face inférieure était texturée avec des motifs ayant des reliefs de différentes hauteurs tels que décrits dans le tableau 1. Les motifs texturés ont été obtenus par laminage avec un cylindre gravé. Le même cylindre a été utilisé pour les échantillons B et C avec une force de serrage différente de façon à faire varier la profondeur de l'emprunte. Ces textures sont présentées sur la Figure 5. Le pas des motifs étant environ 4 mm dans la direction X et Y. Les motifs étaient des cercles de diamètre environ 2,5 mm. Les motifs des exemples E, F et G sont présentés sur les Figures 8a, 8b et 8c, respectivement. Tous les échantillons ont été dégraissés puis on a déposé en surface 0,3 g/m² d'un lubrifiant (Lubrilam) de façon à simuler dans des conditions reproductibles un échantillon brut de laminage. Un quatrième échantillon D a été préparé selon l'art antérieur en déposant sur la face inférieure un vernis primaire d'adhésion.

La configuration du test est présentée sur la Figure 6. Des échantillons de dimension 100x25 mm de tôle 10 et de planches en contreplaqué 32 ont été collés à l'aide d'une colle de type epoxy 31 (Korapür 666) sur une longueur de joint de 16,5 mm et testé en cisaillement de recouvrement.

Les résultats obtenus sont présentés dans le Tableau 1. Lorsque la rupture se produit au sein du bois ou au sein de la colle, la rupture est dite cohésive. Lorsque la rupture se produit à l'interface entre la tôle et la colle, la rupture est dite adhésive.

En l'absence de motif texturé, la rupture est essentiellement adhésive et on observe une forte dispersion de la force de cisaillement. Au contraire, en présence du motif texturé, la rupture est cohésive et la force obtenue est semblable à la force à celle obtenue selon l'art antérieur en présence d'un primaire d'adhésion.

**[Tableau 1]**

| **Tôle** | **Primaire d'adhésion** | **Rₘₐₓ (µm)** | **Rupture** | **Force de cisaillement (MPa)** |
|---|---|---|---|---|
| A | Non | <3 | Adhésive | 9,6 +/- 4,1 |
| B | Non | 137 | Cohésive | 12,2 +/- 0,5 |
| C | Non | 87 | Cohésive | 10,7 +/- 0,6 |
| D | Oui | <3 | Cohésive | 11,6 +/- 0,7 |
| E | Non | 110 | Cohésive | 11,2 +/-1,2 |
| F | Non | 108 | Cohésive | 10,8 +/- 2,2 |
| G | Non | 98 | Cohésive | 9,2 +/- 2,8 |

## Revendications

1. Tôle métallique (10) pour la réalisation de planchers (30), en particulier de véhicules industriels, ladite tôle présentant sur sa face supérieure (11) une pluralité de motifs en relief, chaque motif en relief comprenant une ou plusieurs parties saillantes (20), lesdits motifs en relief étant disposés de façon périodique, discrète et ordonnée, la hauteur *h* desdits motifs en reliefs étant comprise entre 0,3 et 3 mm, **caractérisée en ce qu'**elle présente sur sa face inférieure (12), destinée à être collée sur un support, une surface rugueuse dont la rugosité Rₘₐₓ est comprise entre 10 µm et 250 µm.

2. Tôle métallique selon la revendication 1 **caractérisée en ce que** la rugosité Rₘₐₓ de ladite surface rugueuse est comprise entre 50 µm et 150 µm et de préférence entre 100 µm et 140 µm.

3. Tôle métallique selon la revendication 1 ou la revendication 2 dans laquelle la rugosité de la face inférieure est obtenue par fraisage électrochimique, fraisage mécanique, brossage, ou par déformation typiquement sablage, grenaillage, laminage, embossage, gaufrage, de préférence par laminage.

4. Tôle métallique selon une quelconque des revendications 1 à 3 dans laquelle la rugosité de la face inférieure est obtenue par une texture se répétant de façon périodique et ordonnée, de préférence réalisée par laminage.

5. Tôle métallique selon une quelconque des revendications 1 à 4 dans laquelle la tôle est en un alliage d'aluminium appartenant au groupe regroupant les alliages d'aluminium des séries 1xxx, 3xxx, 5xxx, 6xxx selon la désignation de l'Aluminum Association ainsi que les alliages de la série 7xxx, comprenant moins de 0,4 % Cu.

6. Procédé de fabrication d'une tôle métallique selon une quelconque des revendications 1 à 5 comprenant
(i) une étape de laminage en utilisant un cylindre de laminage gravé comportant des cavités gravées permettant d'obtenir les motifs en relief de la face supérieure de la tôle.
(ii) une étape de fraisage électrochimique, fraisage mécanique, brossage, ou déformation typiquement sablage, grenaillage, laminage, embossage, gaufrage permettant d'obtenir la rugosité de la face inférieure de la tôle.

7. Procédé selon la revendication 6 dans lequel les deux étapes sont réalisées simultanément sur un laminoir (40) comportant deux cylindres gravés : un premier cylindre gravé (41) pour obtenir les motifs en relief de la face supérieure et un second cylindre gravé (42) pour obtenir la texture de la face inférieure de la tôle.

8. Procédé selon la revendication 7 dans lequel les deux cylindres gravés sont les cylindres de travails utilisés lors de la dernière passe d'un laminoir tandem à chaud.

9. Utilisation d'une tôle métallique selon l'une quelconque des revendications 1 à 5 pour réaliser des planchers de véhicules industriels, de préférence des planchers de véhicules frigorifiques.

## Patentansprüche

1. Metallblech (10) zur Herstellung von Böden (30), insbesondere für Nutzfahrzeuge, wobei das Blech auf seiner Oberseite (11) eine Vielzahl von Reliefmustern aufweist, wobei jedes Reliefmuster einen oder mehrere vorspringende Teile (20) umfasst, wobei die Reliefmuster periodisch, diskret und geordnet angeordnet sind, wobei die Höhe *h* der Reliefmuster im Bereich zwischen 0,3 und 3 mm liegt, **dadurch gekennzeichnet, dass** es auf seiner Unterseite (12), die dazu bestimmt ist, auf einen Träger geklebt zu werden, eine raue Fläche aufweist, deren Rauheit Rₘₐₓ im Bereich zwischen 10 µm und 250 µm liegt.

2. Metallblech nach Anspruch 1, **dadurch gekennzeichnet, dass** die Rauheit Rₘₐₓ der rauen Fläche im Bereich zwischen 50 µm und 150 µm und bevorzugt zwischen 100 µm und 140 µm liegt.

3. Metallblech nach Anspruch 1 oder Anspruch 2, wobei die Rauheit der Unterseite durch elektrochemisches Fräsen, mechanisches Fräsen, Bürsten oder durch Verformung, typischerweise Sandstrahlen, Kugelstrahlen, Walzen, Prägen, Prägewalzen bevorzugt durch Walzen, erhalten wird.

4. Metallblech nach einem der Ansprüche 1 bis 3, wobei die Rauheit der Unterseite durch eine sich periodisch und geordnet wiederholende Textur erhalten wird, die bevorzugt durch Walzen hergestellt wird.

5. Metallblech nach einem der Ansprüche 1 bis 4, wobei das Blech aus einer Aluminiumlegierung ist, die zu der Gruppe gehört, die die Aluminiumlegierungen der Serien 1xxx, 3xxx, 5xxx, 6xxx gemäß der Bezeichnung der Aluminum Association sowie die Legierungen der Serie 7xxx zusammenfasst, die weniger als 0,4 % Cu umfassen.

6. Verfahren zur Herstellung eines Metallblechs nach einem der Ansprüche 1 bis 5, umfassend
(i) einen Schritt des Walzens unter Verwendung eines gravierten Walzzylinders, der gravierte Hohlräume umfasst, die es ermöglichen, die Reliefmuster der Oberseite des Blechs zu erhalten,
(ii) einen Schritt des elektrochemischen Fräsens, mechanischen Fräsens, Bürstens oder Verformens, typischerweise Sandstrahlens, Kugelstrahlens, Walzens, Prägens, Prägewalzens der es ermöglicht, die Rauheit der Unterseite des Blechs zu erhalten.

7. Verfahren nach Anspruch 6, wobei die zwei Schritte gleichzeitig auf einem Walzwerk (40) ausgeführt werden, das zwei gravierte Zylinder umfasst: einen ersten gravierten Zylinder (41), um die Reliefmuster der Oberseite zu erhalten, und einen zweiten gravierten Zylinder (42), um die Textur der Unterseite des Blechs zu erhalten.

8. Verfahren nach Anspruch 7, wobei die zwei gravierten Zylinder die Arbeitszylinder sind, die beim letzten Durchgang eines Tandem-Warmwalzwerks verwendet werden.

9. Verwendung eines Metallblechs nach einem der Ansprüche 1 bis 5, um Böden für Nutzfahrzeuge, bevorzugt Böden für Kühlfahrzeuge, herzustellen.

## Claims

1. A sheet metal plate (10) for making flooring (30), in particular of industrial vehicles, said sheet metal plate having on its upper face (11) a plurality of raised patterns, each raised pattern comprising one or more protruding portion(s) (20), said raised patterns being arranged periodically, discreetly and in orderly fashion, the height h of said raised patterns being comprised between 0.3 and 3 mm, **characterized in that** it has on its lower face (12), intended to be bonded to a support, a rough surface whose roughness Rₘₐₓ is comprised between 10 µm and 250 µm.

2. The sheet metal plate according to claim 1, **characterized in that** the roughness Rₘₐₓ of said rough surface is comprised between 50 µm and 150 µm and preferably between 100 µm and 140 µm.

3. The sheet metal plate according to claim 1 or claim 2, wherein the roughness of the lower face is obtained by electrochemical milling, mechanical milling, brushing, or by deformation, typically sandblasting, shot-peening, rolling, embossing, rollembossing, preferably by rolling.

4. The sheet metal plate according to any one of claims 1 to 3, wherein the roughness of the lower face is obtained by a texture repeated periodically and in orderly fashion, preferably made by rolling.

5. The sheet metal plate according to any one of claims 1 to 4, wherein the sheet metal plate is made of an aluminum alloy belonging to the group including the aluminum alloys of the 1xxx, 3xxx, 5xxx, 6xxx series according to the designation of the Aluminum Association as well as the alloys of the 7xxx series, comprising less than 0.4% Cu.

6. A method of manufacturing a sheet metal plate according to any one of claims 1 to 5, comprising
(i) a rolling step using a rolling engraved roll including engraved cavities allowing obtaining the raised patterns of the upper face of the sheet metal plate.
(ii) a step of electrochemical milling, mechanical milling, brushing, or deformation, typically sandblasting, shot-peening, rolling, embossing, rollembossing, allowing obtaining the roughness of the lower face of the sheet metal plate.

7. The method according to claim 6, wherein the two steps are carried out simultaneously on a rolling mill (40) including two engraved rolls: a first engraved roll (41) to obtain the raised patterns of the upper face and a second engraved roll (42) to obtain the texture of the lower face of the sheet metal plate.

8. The method according to claim 7, wherein the two engraved rolls are the work rolls used during the last pass of a hot tandem rolling mill.

9. A use of a sheet metal plate according to any one of claims 1 to 5 for making flooring of industrial vehicles, preferably flooring of refrigerated vehicles.
